# EUROPÄISCHE PATENTSCHRIFT

(11) **EP 0 856 121 B1**
(45) Veröffentlichungstag und Bekanntmachung des Hinweises auf die Patenterteilung: **23.10.2002**
(21) Anmeldenummer: 97941939.7
(22) Anmeldetag: 16.08.1997
(51) Int. Cl.: F21S 8/10, F21V 17/10, B60Q 1/04

(54) **SCHEINWERFER FÜR FAHRZEUGE**
VEHICLE HEADLIGHT
PROJECTEUR POUR VEHICULES A MOTEUR

(30) Priorität: 16.08.1996 DE 19632908
(43) Veröffentlichungstag der Anmeldung: 05.08.1998
(73) Patentinhaber: Hella KG Hueck & Co., 59552 Lippstadt (DE)
(72) Erfinder: SCHALL, Hans-Christian, D-33175 Bad Lippspringe (DE)
(86) Internationale Anmeldenummer: EP9704476
(87) Internationale Veröffentlichungsnummer: WO98008022

(56) Entgegenhaltungen:
- WO-A-92/02757
- DE-A- 4 134 101
- FR-A- 2 653 531

## Beschreibung

Die Erfindung betrifft einen Scheinwerfer für Fahrzeuge,
- mit einer eine Gasentladungslampe aufweisenden Abblendlichteinheit,
- mit einem Scheinwerfergehäuse, in dem die Ablendlichteinheit verstellbar angeordnet ist,
- mit einer lichtdurchlässigen Abschlußscheibe, welche die Vorderseite des Scheinwerfergehäuses abschließt,
- mit einem Deckel, welcher eine zum Wechsel der Gasentladungslampe dienende Gehauseöffnung auf der Rückseite des Scheinwerfergehäuses abdeckt,
- mit einem außerhalb des Scheinwerfergehäuses angeordneten.elektrischen Versorgungsgerät,
- mit einem elektrischen Anschlußstecker, der mit der elektrischen Gasentladungslampe gekoppelt ist und
- mit einem elektrischen Hochspannungskabel, welches das elektrische Versorgungsgerät und dem elektrischen Anschlußstecker verbindet und mit einem quer zur Lichtaustrittsrichtung des Scheinwerfers verlaufenden Endabschnitt durch eine seitliche Öffnung des Deckels hindurchgeht.

Ein solcher Scheinwerfer für Fahrzeuge ist aus der DE 41 34 101 C2 bekannt. Im Scheinwerfergehäuse ist eine verstellbare Abblendlicht-Einheit mit einer Gasentladungslampe angeordnet. Auf den vorderen umlaufenden Rand des Scheinwerfergehäuses ist eine lichtdurchlässige Abschlußscheibe dicht aufgesetzt. Das Scheinwerfergehäuse weist auf seiner Rückseite eine Gehäuseöffnung auf, durch welche hindurch ein Wechsel der Gasentladungslampe möglich ist. Die Gehäuseöffnung ist durch einen Deckel dicht verschlossen. An der Außenseite des Deckels ist ein elektrisches Versorgungsgerät für die Gasentladungslampe befestigt. Von dem elektrischen Versorgungsgerät führen zwei Hochspannungskabel zu einem elektrischen Anschlußstecker im Inneren des Scheinwerfers. Der Anschlußstecker ist in Lichtaustrittsrichtung auf einen Sockel der Gasentladungslampe aufgesetzt. Die Hochspannungskabel benötigen eine starke Isolierung, wenn in dem Versorgungsgerät ein Zündteil zum Zünden der Gasentladungslampe integriert ist. Die Hochspannungskabel weisen wegen der starken Isolierung eine geringere Elastizität auf. Bei der Verwendung von Hochspannungskabeln mit einer geringen Elastizität ist der Reflektor nur dann leichtgängig verstellbar, wenn der Deckel in einem entsprechend großen Abstand zum elektrischen Anschlußstecker angeordnet ist und zusätzlich die Hochspannungskabel in einer Schleife verlaufen. Ein möglichst großer Abstand des Deckels zum Anschlußstecker und die Anordnung des elektrischen Versorgungsgerätes an der Außenseite des Deckels führt zu einer entsprechend großen Bautiefe des Scheinwerfers. In vielen Fahrzeugen können so tief bauende Scheinwerfer wegen Innenplatzverhältnissen nicht mehr eingebaut werden. Zudem ist ein Wechsel der Gasentladungslampe schwierig durchführbar, da der Deckel nach einem Lösen vom Scheinwerfergehäuse wegen den Hochspannungskabeln nur sehr wenig vom Scheinwerfergehäuse abhebbar ist und dann lediglich ein Teil der vom Deckel verschließbaren Gehäuseöffnung zugänglich ist. Weiterhin muß bei einem Wechsel der Gasentladungslampe das elektrische Versorgungsgerät zusammen mit dem Deckel von dem Scheinwerfergehäuse abgenommen werden.

Aus der DE 196 00 638 A1 ist ein Scheinwerfer für Fahrzeuge bekanntgeworden bei welchem das elektrische Versorgungsgerät seitlich neben der Abblendlichteinheit an dem Deckel gehaltert ist. Die Hochspannungskabel führen durch eine große seitliche Öffnung des Deckels hindurch. Um die seitliche Öffnung des Deckels abzudichten, ist zwischen dem äußeren umlaufenden Rand des elektrischen Versorgungsgerätes und dem Deckel eine rahmenartige Dichtung eingesetzt. Wegen der großen thermischen Belastung durch die Gasentladungslampe und des elektrischen Versorgungsgerätes kann es zu Undichtigkeiten an der großen Abdichtungsfläche zwischen dem elektrischen Versorgungsgerät und dem Deckel führen. Die Hochspannungskabel verlaufen im Scheinwerferinneren zwischen dem elektrischen Versorgungsgerät und dem elektrischen Anschlußstecker der Abblendlichteinheit annähernd auf direktem Weg, damit die Hochspannungskabel beim Verstellen der Abblendlicht-Einheit nicht behindern. Wegen den kurzen Hochspannungskabeln kann der Deckel nicht so weit vom Scheinwerfergehäuse abgenommen werden, daß der auf einen Sockel der Gasentladungslampe aufgesetzte elektrische Anschlußstecker gut zugänglich ist. Zudem ist der Deckel wegen des an dem Deckel befestigten elektrischen Versorgungsgerätes schwierig im Handling.

Aufgabe der Erfindung ist es, den im Oberbegriff des Anspruchs 1 beschriebenen Scheinwerfer für Fahrzeuge derart zu gestalten, daß der der Abblendlicht-Einheit zugeordnete Deckel auch bei einem relativ steifen Hochspannungskabel und bei einem kurzen Abschnitt des Hochspannungskabels im Scheinwerferinneren nach einem Lösen vom Scheinwerfergehäuse so weit vom Scheinwerfergehäuse abnehmbar ist, daß annähernd die gesamte Gehäuseöffnung und somit die Gasentladungslampe von Hand gut zugänglich ist. Diese Aufgabe wird nach der Erfindung dadurch gelöst, daß
- das elektrische Versorgungsgerät in einem Abstand zum Deckel und quer zur Lichtaustrittsrichtung gesehen zwischen der Rückseite des Deckels und der Vorderseite des Scheinwerfers neben der Abblendlicht-Einheit angeordnet ist,
- das Hochspannungskabel zwischen dem elektrischen Versorgungsgerät und dem Deckel außerhalb des Scheinwerfergehäuses verläuft und mindestens in einem an die seitliche Öffnung des Deckels angrenzenden äußeren Abschnitts freistehend verläuft,
- der Deckel mit einem aus elastischem Werkstoff bestehenden Randbereich seine seitliche Öffnung begrenzt, dichtend an dem Hochspannungskabel anliegt und wegen dem elastischen Randbereich von der Gehäuseöffnung wegschwenkbar ist.

Der Deckel kann nach seinem Lösen vom Scheinwerfergehäuse von der Gehäuseöffnung weggeschwenkt werden, bis weitestgehend die gesamte Gehäuseöffnung für einen Wechsel der Gasentladungslampe gut zugänglich ist. Die Abblendlicht-Einheit ist wegen dem freistehenden äußeren Abschnitt des Hochspannungskabels leichtgängig verstellbar. Das seitlich der Abblendlicht-Einheit angeordnete elektrische Versorgungsgerät kann an einer geeigneten Stelle des Scheinwerfergehäuses oder der Fahrzeugkarosserie gehaltert sein und quer zur Lichtaustrittsrichtung gesehen zwischen der Rückseite des der Gasentladungslampe benachbarten Deckels und der Vorderseite des Scheinwerfers angeordnet sein. Beim Verstellen der Abblendlichteinheit entstehen wegen dem dicht an dem Hochspannungskabel anliegenden elastischen Randbereich des Deckels zwischen dem Hochspannungskabel und der Abblendlichteinheit keine so großen Verspannungskräfte, daß die Gasentladungslampe zu einem Reflektor der Abblendlichteinheit defocussiert wird. Weiterhin kann das elektrische Versorgungsgerät von der Außenseite des Scheinwerfers her gewechselt werden, und das Scheinwerfergehäuse ist auch für einen Scheinwerfer ohne Vorschaltgerät und Gasentladungslampe, das heißt mit einer eine Glühlampe aufweisenden Abblendlicht-Einheit verwendbar.

Die Bautiefe des Scheinwerfers ist besonders klein, wenn mindestens ein Teil des Anschlußsteckers im Inneren des Deckels angeordnet ist und der mit dem Anschlußstecker verbundene Endabschnitt des Hochspannungskabels annähernd in einem rechten Winkel zur Längsachse der Gasentladungslampe und zu einer Aufsteckrichtung des Anschlußsteckers verläuft.

Die Abblendlicht-Einheit kann um einen großen Verstellweg leichtgängig verschwenkt werden, wenn der elastische Randbereich des Deckels ein Balg ist. Der Balg kann faltbar sein oder im Querschnitt einen mäanderförmigen Verlauf aufweisen. Der Balg kann auch kegeistumpfförmig gestaltet sein und vom Deckel nach außen abstehen, wobei die kleine Deckfläche des Kegelstumpfes die das Hochspannungskabel aufnehmende Öffnung aufweist.

Der Deckel ist kostengünstig herstellbar, wenn er zusammen mit seinem die seitliche Öffnung begrenzenden Randbereich einstückig aus einem elastischen Werkstoff hergestellt ist. Es besteht jedoch auch die Möglichkeit, daß der elastische Randbereich von einem separaten Dichtungsteil gebildet ist, welcher eine Freimachung eines aus starrem Werkstoff bestehenden Deckels dicht verschließt. Ein starrer Deckel schützt den elektrischen Anschlußstecker gegen ungewollte Beschädigung von außen.

Bei einer besonders vorteilhaften Weiterbildung der Erfindung ist das elektrische Versorgungsgerät an einem Deckel befestigt, welcher eine Gehäuseöffnung abdeckt, die zum Wechsel einer seitlich neben der Abblendlicht-Einheit angeordneten Lampe dient, und welcher gegenüber dem der Gasentladungslampe benachbarten Deckel zur Vorderseite des Scheinwerfer hin versetzt angeordnet ist. Dadurch kann für den Scheinwerfer ein Scheinwerfergehäuse verwendet werden, welches auch für einen anderen Scheinwerfer benutzt wird, dessen Abblendlicht-Einheit mit einer Glühlampe versehen ist. Die Anordnung des elektrischen Versorgungsgerätes an dem der Lampe benachbarten Deckel ist besonders zwecksmäßig, wenn der die Lampe aufnehmende Reflektor in seiner Tiefe kleiner baut, als die die Gasentladungslampe aufweisende Abblendlicht-Einheit. Dadurch muß der Scheinwerfer an seiner Rückseite wegen dem elektrischen Versorgungsgerät nicht tiefer bauen.

Das Hochspannungskabel ist an der Rückseite des Scheinwerfers sicher gehaltert, wenn an der entgegen der Lichtaustrittsrichtung gerichteten Rückseite des elektrischen Versorgungsgerätes eine zur seitlichen Öffnung des Deckels hin geöffnete Tasche angeordnet ist, in welche ein zu einer Schleife gebogener Abschnitt des Hochspannungskabels eingeschoben ist.

Bei einem Scheinwerfer, welcher an seiner Rückseite zu wenig Raum für das elektrische Versorgungsgerät aufweist, kann das elektrische Versorgungsgerät außen an einer Seitenwand eines topfförmig gestalteten Scheinwerfergehäuses gehaltert sein.

Zwei Ausführungsbeispiele nach der Erfindung sind in den Zeichnungen dargestellt, und zwar zeigen
- Figur 1: einen mittleren horizontalen Schnitt durch einen Scheinwerfer für Fahrzeuge, mit einem an der Scheinwerferrückseite angeordneten elektrischen Versorgungsgerät für eine Gasentladungslampe und
- Figur 2: einen mittleren horizontalen Schnitt durch einen anderen Scheinwerfer für Fahrzeuge, bei welchem das elektrische Versorgungsgerät für die Gasentladungslampe an einer unteren Seitenwand des Scheinwerfers gehaltert ist.

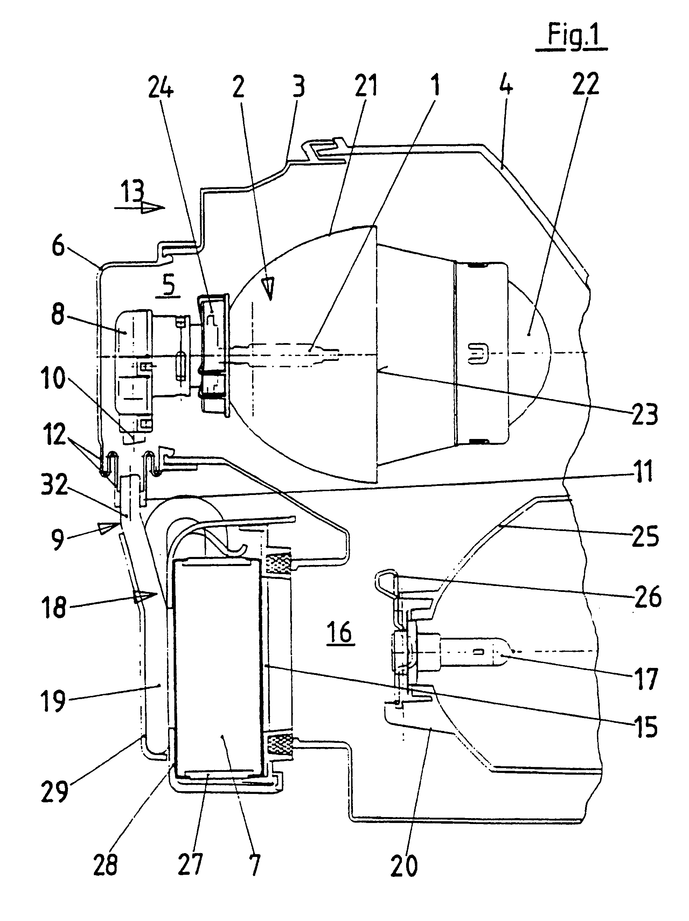

Der Scheinwerfer für Fahrzeuge nach Figur 1 weist ein aus Kunststoff bestehendes topfförmiges Gehäuse (3) auf, mit dessen vorderen umlaufenden Rand eine schalenförmige lichtdurchlässige Abschlußscheibe (4) dicht verbunden ist. Im Inneren des Scheinwerfers sind eine verstellbare Fernlicht- und Abblendlicht-Einheit (20 und 2) angeordnet. Die Fernlicht- und Abblendlicht-Einheit sind durch ein nicht dargestelltes Verbindungselement starr miteinander verbunden und sind somit zusammen verstellbar. Die Fernlicht-Einheit (20) weist eine wesentlich geringere Bautiefe auf als die Abblendlicht-Einheit (2) und ist gegenüber der Abblendlicht-Einheit (2) zur Vorderseite des Scheinwerfers hin versetzt angeordnet. Die Abblendlicht-Einheit besteht im wesentlichen aus einem schalenförmigen Reflektor (21) einer von einem Gestell getragenen Linse (22) und einer zwischen Reflektor (21) und Linse (22) angeordneten Blende (23). Der schalenförmige Reflektor (21) weist im Scheitelbereich eine zur Aufnahme einer Gasentladungslampe (1) dienende Öffnung auf. Die Gasentladungslampe (1) ist mittels eines Halteringes (24) an dem Reflektor (21) befestigt. Die Fernlicht-Einheit (20) weist einen schalenförmigen Reflektor (25) und eine Glühlampe (17) auf, welche in eine in den Scheitelbereich des Reflektors (25) eingebrachte Öffnung eingesetzt ist und durch eine Bügelfeder (26) am Reflektor (25) befestigt ist. Die Lampe (17) der Fernlicht-Einheit (20) ist durch eine Gehäuseöffnung (16) und die Gasentladungslampe (1) der Abblendlichteinheit (2) durch eine Gehäuseöffnung (5) in der Rückseite des Scheinwerfergehäuses hindurch wechselbar. Die der Abblendlicht-Einheit (2) zugeordnete Gehäuseöffnung (5) ist durch einen Deckel (6) dicht verschlossen. Der Deckel (6) ist aus einem elastischen Werkstoff, z. B. Gummi hergestellt und ist schalenförmig ausgeführt. In den schalenförmigen Deckel (6) ragt ein elektrischer Anschlußstecker (8) hinein. Der elektrische Anschlußstecker (8) ist in Lichtaustrittsrichtung des Scheinwerfers auf einen Sockel der Gasentladungslampe (1) aufgesetzt und durch einen Renkverschluß gehaltert. Zu dem elektrischen Anschlußstecker (8) hin führt ein im Querschnitt kreisrundes Hochspannungskabel (9). Der zum elektrischen Anschlußstecker (8) hinführende freie Endabschnitt (10) des Hochspannungskabels (9) verläuft quer zur Lichtaustrittsrichtung des Scheinwerfers und führt durch eine in die Seitenwand des schalenförmigen Deckels (6) eingebrachte Öffnung (11) hindurch. Die Öffnung (11) ist von einem elastisch nachgiebigen Randbereich (12) begrenzt, welcher dicht an der Mantelfläche des Hochspannungskabels anliegt. Der elastische Randbereich (12) ist einstückig mit dem Deckel (6) und als faltbarer Balg ausgeführt. Das Hochspannungskabel (9) ist mit einem elektrischen Versorgungsgerät (7) verbunden, in welchem das Zündteil zum Zünden der Gasentladungslampe (1) integriert ist und verläuft außerhalb des Scheinwerfergehäuses (3) mit einem an die seitliche Öffnung (11) des Deckels (6) angrenzenden Abschnitt (32) freistehend. Das elektrische Versorgungsgerät weist ein kastenförmiges Gehäuse (27) auf, welches an der Außenseite eines die Gehäuseöffnung (16) verschließenden Deckel (15) angeordnet ist und an dem Deckel (15) mittels eines das elektrische Versorgungsgerät (7) überspannenden Bügels (28) befestigt ist. An der entgegen der Lichtaustrittsrichtung gerichteten Rückseite des Bügels (28) ist ein Bauteil (29) befestigt, welches zusammen mit dem Bügel (28) eine Tasche (18) bildet, welche zur Öffnung (11) des Deckels (6) hin geöffnet ist. In die Tasche (18) ist ein zu einer Schleife gebogener Abschnitt (19) des Hochspannungskabels (9) eingeschoben. Ein Schenkel des zur Schleife gebogenen Abschnitts (19) geht in den freistehenden Abschnitt (32) des freien Endabschnitt (10) über, während der andere Schenkel des Abschnitts (19) mit dem Endabschnitt verbunden ist, welcher durch eine umlaufende Seitenwand des kastenförmigen Gehäuses (27) hindurch in das Innere des elektrischen Versorgungsgerätes (7) führt.

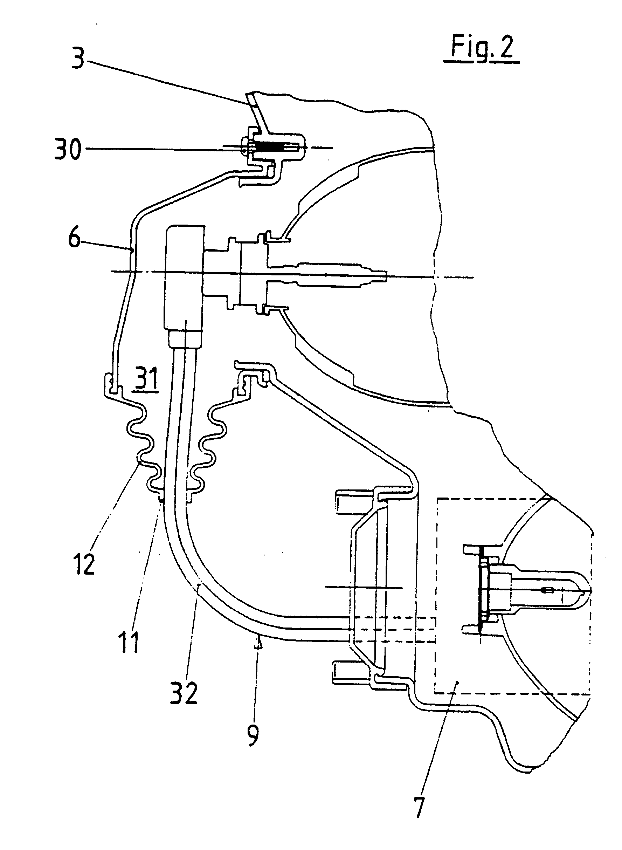

Bei dem Scheinwerfer für Fahrzeuge nach Figur 2 ist der Deckel (6) aus einem starren Werkstoff hergestellt und mittels Schrauben (30) am Rand der Gehäuseöffnung (5) befestigt. Der Deckel (6) ist topfförmig ausgeführt und weist in seiner umlaufenden Seitenwand eine kreisrunde Freimachung (31) auf, welche durch den von einem separaten Balg gebildeten elastischen Randbereich (12) des Deckels (6) dicht verschlossen ist. Der Randbereich (12) ist kegelstumpfförmig gestaltet und steht vom Deckel (6) nach außen ab. In die kleine Deckfläche des kegelstumpfförmigen Randbereichs (12) ist die das Hochspannungskabel (9) aufnehmende Öffnung (11) des Deckels (6) eingebracht. Die Mantelfläche des kegelstumpfförmigen Randbereichs (12) verläuft in den in Längsrichtung des Kegelstumpfes verlaufenden Schnitten mäanderförmig. Das Hochspannungskabel (9) verläuft ausgehend vom Deckel (6) bis unterhalb des Scheinwerfers und ist dort mit dem elektrischen Versorgungsgerät verbunden, welches außen an einer unteren Seitenwand des Scheinwerfergehäuses (3) befestigt ist.

### Bezugszeichenliste

### Scheinwerfer für Fahrzeuge

- 1: Gasentladungslampe
- 2: Abblendlicht-Einheit
- 3: Scheinwerfergehäuse
- 4: Abschlußscheibe
- 5: Gehäuseöffnung
- 6: Deckel (Gasentladungslampe)
- 7: elektrisches Versorgungsgerät
- 8: elektrischer Anschlußstecker
- 9: Hochspannungskabel
- 10: Endabschnitt
- 11: Öffnung
- 12: Randbereich
- 13: Aufsteckrichtung
- 14: Freimachung
- 15: Deckel (Lampe)
- 16: Gehäuseöffnung
- 17: Lampe
- 18: Tasche
- 19: Abschnitt
- 20: Fernlicht-Einheit
- 21: Reflektor
- 22: Linse
- 23: Blende
- 24: Haltering
- 25: Reflektor
- 26: Bügelfeder
- 27: kastenförmiges Gehäuse
- 28: Bügel
- 29: Bauteil
- 30: Schrauben
- 31: Freimachung
- 32: Abschnitt

## Patentansprüche

1. Scheinwerfer für Fahrzeuge,
- mit einer eine Gasentladungslampe (1) aufweisenden Abblendlichteinheit (2),
- mit einem Scheinwerfergehäuse (3), in dem die Ablendlichteinheit verstellbar angeordnet ist,
- mit einer lichtdurchlässigen Abschlußscheibe (4), welche die Vorderseite des Scheinwerfergehäuses (3) abschließt,
- mit einem Deckel (6), welcher eine zum Wechsel der Gasentladungslampe (1) dienende Gehäuseöffnung (5) auf der Rückseite des Scheinwerfergehäuses (3) abdeckt,
- mit einem außerhalb des Scheinwerfergehäuses (3) angeordneten elektrischen Versorgungsgerät (7),
- mit einem elektrischen Anschlußstecker (8), der mit der elektrischen Gasentladungslampe (1) gekoppelt ist,
- mit einem elektrischen Hochspannungskabel (9), welches das elektrische Versorgungsgerät (7) und den elektrischen Anschlußstecker (8) verbindet und mit einem quer zur Lichtaustrittsrichtung des Scheinwerfers verlaufen den Endabschnitt durch eine seitliche Öffnung (11) des Deckels (6) hindurchgeht,
**dadurch gekennzeichnet, daß**
- das elektrische Versorgungsgerät (7) in einem Abstand zum Deckel (6) und quer zur Lichtaustrittsrichtung gesehen zwischen der Rückseite des Deckels (6) und der Vorderseite der Scheinwerfers neben der Abblendlicht-Einheit (2) angeordnet ist,
- das Hochspannungskabel (9) zwischen dem elektrischen Versorgungsgerät (7) und dem Deckel (5) außerhalb des Scheinwerfergehäuses (3) verläuft und mindestens in einem an die seitliche Öffnung (11) des Deckels (6) angrenzenden äußeren Abschnitts (32) freistehend verläuft,
- der Deckel (6) mit einem aus elastischem Werkstoff bestehenden Randbereich (12) seine seitliche Öffnung (11) begrenzt, dichtend an dem Hochspannungskabel (9) anliegt und wegen dem elastischen Randbereich (12) von der Gehäuseöffnung (5) wegschwenkbar ist.

2. Scheinwerfer nach Anspruch 1, **dadurch gekennzeichnet, daß** ein mit dem Anschlußstecker (8) verbundener und durch die Öffnung (11) des Deckels (6) hindurchgehender Endabschnitt (10) des Hochspannungskabels (9) annähernd in einem rechten Winkel zur Längsachse der Gasentladungslampe (1) verläuft.

3. Scheinwerfer nach Anspruch 1 oder 2, **dadurch gekennzeichnet, daß** der elastische Randbereich (12) des Deckels (6) ein Balg ist.

4. Scheinwerfer nach einem der Ansprüche 1 bis 3, **dadurch gekennzeichnet, daß** der elastische Randbereich (12) der Öffnung (11) kegelstumpfförmig gestaltet ist und vom Deckel (6) nach außen absteht.

5. Scheinwerfer nach einem der Ansprüche 1 bis 4, **dadurch gekennzeichnet, daß** der Deckel (6) zusammen mit dem die seitliche Öffnung (11) begrenzenden Randbereich (12) einstückig aus einem elastischen Werkstoff hergestellt ist.

6. Scheinwerfer nach einem der Ansprüche 1 bis 4, **dadurch gekennzeichnet, daß** der elastische Randbereich (12) von einem separaten Dichtungsteil gebildet ist, welcher eine Freimachung (14) eines aus starrem Werkstoff bestehenden Deckels (6) dicht verschließt.

7. Scheinwerfer nach einem der Ansprüche 1 bis 6, **dadurch gekennzeichnet, daß** das elektrische Versorgungsgerät (7) an einem Deckel (15) befestigt ist, welcher eine Gehäuseöffnung (16) abdeckt, die zum Wechsel einer seitlich neben der Abblendlicht-Einheit (2) angeordneten Lampe (17) dient, und welcher gegenüber dem der Gasentladungslampe (1) benachbarten Deckel (6) zur Vorderseite des Scheinwerfers hin versetzt angeordnet ist.

8. Scheinwerfer nach einem der Ansprüche 1 bis 7, **dadurch gekennzeichnet, daß** an der entgegen der Lichtaustrittsrichtung gerichteten Rückseite des elektrischen Versorgungsgerätes (7) eine zur seitlichen Öffnung (11) des Deckels (6) hin geöffnete Tasche (18) angeordnet ist, in welche ein zu einer Schleife gebogener Abschnitt (19) des Hochspannungskabels (9) eingeschoben ist.

9. Scheinwerfer nach einem der Ansprüche 1 bis 8, **dadurch gekennzeichnet, daß** das elektrische Versorgungsgerät (7) außen an einer Seitenwand eines topfförmig gestalteten Scheinwerfergehäuses (3) halterbar ist.

## Claims

1. Headlamp for vehicles, comprising
• a dipped-light unit (2) with a gas-discharge lamp (1),
• a headlamp housing (3) with the dipped-light unit adjustably arranged therein,
• a light-permeable sealing cover (4) which seals the front of the headlamp housing (3),
• a cover (6) which covers a housing opening (5) at the rear of the headlamp housing (3) which serves the replacement of the gas-discharge lamp (1),
• an power supply unit (7) arranged outside the headlamp housing (3),
• an electric socket (8) which is coupled to the electric gas-discharge lamp (1),
• an electric high-voltage cable (9) which connects the power supply unit (7) and the electric socket (8) and which passes with an end section which extends transversely to the light-emission direction of the headlamp through a lateral opening (11) of the cover (6),
**characterised in that**
• the power supply unit (7) is arranged at a distance from the cover (6) and, as seen transversely to the light-emission direction, between the rear of the cover (6) and the front of the headlamp along the dipped-light unit (2),
• the high-voltage cable (9) extends between the power supply unit (7) and the cover (5) outside the headlamp housing (3), and it extends freestanding at least in one outer section (32) adjacent the lateral opening (11) of the cover (6),
• the cover (6) defines with an edge area (12) of an elastic material a lateral opening (11), sealingly abuts the high-voltage cable (9) and is due to the elastic edge area (12) pivotal away from the housing opening (5).

2. Headlamp according to Claim 1, **characterised in that** an end section (10) of the high-voltage cable (9), which is connected to the socket (8) and passes through the opening (11) of the cover (6), extends virtually rectangularly to the longitudinal axis of the gas-discharge lamp (1).

3. Headlamp according to Claim 1 or 2, **characterised in that** the elastic edge area (12) of the cover (6) is a bellows.

4. Headlamp according to one of Claims 1 to 3, **characterised in that** the elastic edge area (12) of the opening (11) is of conical truncated design and protrudes externally from the cover (6).

5. Headlamp according to one of Claims 1 to 4, **characterised in that** the cover (6) is, together with the edge area (12) which defines the lateral opening (11), made in one piece of an elastic material.

6. Headlamp according to one of Claims 1 to 4, **characterised in that** the elastic edge area (12) is formed by a separate sealing element which sealingly closes a free space (14) of a cover (6) of a rigid material.

7. Headlamp according to one of Claims 1 to 6, **characterised in that** the power supply unit (7) is mounted onto a cover (15) which covers a housing opening (16) which serves the replacement of a lamp (17) arranged laterally alongside the dipped-light unit (2), and which is transposed, relative to the cover (6) adjacent the gas-discharge lamp (1), towards the front of the headlamp.

8. Headlamp according to one of Claims 1 to 7, **characterised in that** at the rear of the power supply unit (7) oriented against the light-emission direction is arranged a pocket (18) which is open towards the lateral opening (11) of the cover (6) and into which is pushed a section (19) of the high-voltage cable (9) which is looped.

9. Headlamp according to one of Claims 1 to 8, **characterised in that** the power supply unit (7) is mountable externally on a sidewall of a troughshaped headlamp housing (3).

## Revendications

1. Phare pour véhicules, comportant :
- une unité de feu de croisement (2) présentant une lampe à décharge (1)
- un boîtier de phare (3) dans lequel l'unité de feu de croisement (2) est agencée de manière réglable,
- une plaque de fermeture (4) transparente qui ferme la face antérieure du boîtier de phare (3),
- un couvercle (6) qui recouvre une ouverture de boîtier (5) servant au remplacement de la lampe à décharge, sur la face postérieure du boîtier de phare (3),
- un appareil d'alimentation électrique (7) agencé en dehors du boîtier de phare (3),
- une fiche de connexion électrique (8) qui est couplée à la lampe à décharge (1) électrique,
- un câble à haute tension (9) qui relie l'appareil d'alimentation électrique (7) et la fiche de connexion électrique (8) et qui passe, avec un tronçon d'extrémité s'étendant transversalement à la direction de sortie de la lumière du phare, à travers une ouverture latérale (11) du couvercle (6),
**caractérisé en ce que** :
- l'appareil d'alimentation électrique (7) est agencé à distance du couvercle (6) et, vu transversalement à la direction de sortie de la lumière, entre la face postérieure du couvercle (6) et la face antérieure du phare, à côté de l'unité de feu de croisement (2),
- le câble à haute tension (9) s'étend entre l'appareil d'alimentation électrique (7) et le couvercle (6) en dehors du boîtier de phare (3) et s'étend au moins librement dans un tronçon (32) extérieur adjacent à l'ouverture latérale (11) du couvercle (6),
- le couvercle (6) délimite son ouverture latérale (11) avec une région de bord (12) constituée par un matériau élastique, il s'applique de façon étanche contre le câble à haute tension (9), et il peut être pivoté en éloignement de l'ouverture de boîtier (5) en raison de la région de bord (12) élastique.

2. Phare selon la revendication 1, **caractérisé en ce qu'**un tronçon d'extrémité (10) du câble à haute tension (9) passant à travers l'ouverture (11) du couvercle (6) et relié à la fiche de connexion (8) s'étend approximativement en angle droit par rapport à l'axe longitudinal de la lampe à décharge (1).

3. Phare selon l'une ou l'autre des revendications 1 et 2, **caractérisé en ce que** la région de bord élastique (12) du couvercle (6) est un soufflet.

4. Phare selon l'une des revendications 1 à 3, **caractérisé en ce que** la région de bord élastique (12) de l'ouverture est réalisée de forme tronconique et fait saillie vers l'extérieur en dépassement du couvercle (6).

5. Phare selon l'une des revendications 1 à 4, **caractérisé en ce que** le couvercle (6) est réalisé d'un seul tenant en un matériau élastique, conjointement avec la région de bord (12) limitant l'ouverture latérale (11).

6. Phare selon l'une des revendications 1 à 4, **caractérisé en ce que** la région de bord élastique (12) est formée par une pièce d'étanchéité séparée qui ferme de manière étanche un dégagement (14) d'un couvercle (6) en un matériau rigide.

7. Phare selon l'une des revendications 1 à 6, **caractérisé en ce que** l'appareil d'alimentation électrique (7) est fixé sur un couvercle (15) qui recouvre une ouverture de boîtier (16) qui sert au remplacement d'une lampe (17) agencée latéralement à côté de l'unité de feu de croisement (2) et qui est agencé en décalage vers la face antérieure du phare par rapport au couvercle (6) voisin de la lampe à décharge (1).

8. Phare selon l'une des revendications 1 à 7, **caractérisé en ce que** sur la face postérieure de l'appareil d'alimentation électrique (7), orientée à l'opposée de la direction de sortie de la lumière, est agencée une poche (18) ouverte vers l'ouverture latérale (11) du couvercle (6), dans laquelle est introduit un tronçon (19) du câble à haute tension, arqué en forme de boucle.

9. Phare selon l'une des revendications 1 à 8, **caractérisé en ce que** l'appareil d'alimentation électrique (7) peut être fixé à l'extérieur sur une paroi latérale d'un boîtier de phare (3) réalisé sous forme de pot.
